# EUROPEAN PATENT APPLICATION

(11) **EP 4 822 303 A1**
(43) Date of publication of application: **14.10.2026**
(21) Application number: 26160965.5
(22) Date of filing: 26.02.2026
(51) Int. Cl.: G01F 1/684, G01F 5/00, G01L 19/00, G01F 15/18

(54) **SENSOR DEVICE**

(30) Priority: 04.03.2025 JP 2025034008
(71) Applicant: MMI Semiconductor Co., Ltd., Tokyo, 206-8567 (JP)
(72) Inventor: NIMURA, Toshihiko, YASU-SHI, 5202362 (JP); KAMEI, Makoto, YASU-SHI, 5202362 (JP); SHIMOMOTO, Yasushi, YASU-SHI, 5202362 (JP)
(74) Representative: Regimbeau

(57) **Abstract**

A sensor device includes a flow path-forming member including a first wall surface, a second wall surface facing the first wall surface, and a third wall surface facing the first wall surface. The first wall surface, the second wall surface, and the third wall surface define a first flow path, and the second wall surface is disposed at a position closer to the first wall surface than the third wall surface is in a second direction.

## Description

### BACKGROUND

The present disclosure relates to a sensor device.

A flow rate measuring device provided in a path through which a fluid flows is known (see, for example, Patent Document 1). The flow rate measuring device disclosed in Patent Document 1 includes a first branch path having a first opening for taking in at least a portion of the fluid from the path, and a second branch path that branches from the first branch path and that has a flow rate-detecting portion for detecting a flow rate of the fluid. A plate-like member for reducing the generation of vortices is provided in the first branch path.

### RELATED-ART DOCUMENT

### PATENT DOCUMENT

Patent Document 1: Japanese Unexamined Patent Application Publication No. 2020-30171

In the technique disclosed in Patent Document 1, the plate-like member is formed at a position facing an opening that serves as an inlet of the second branch path. Therefore, dust contained in the fluid that flows through the first branch path may collide with the plate-like member, thereby changing direction and flowing toward the inlet of the second branch path. This may cause the dust to flow into the second branch path and reach the flow rate-detecting portion. In the related art, there is room for improvement regarding the flow of dust into the flow rate-detecting portion.

An object of the present disclosure is to provide a sensor device capable of suppressing inflow of dust into a second flow path in which a detection portion of a sensor chip is disposed.

### SUMMARY

A sensor device in one aspect of the present disclosure includes a flow path-forming member including a flow path, the flow path including a first flow path extending from a first opening to a second opening in a first direction, and a second flow path branching from the first flow path and in which a detection portion of a sensor chip is disposed. The flow path-forming member includes a first wall surface formed continuously from an upstream side to a downstream side of a connection portion with the second flow path in the first direction; a second wall surface facing the first wall surface in a second direction perpendicular to the first direction, the second wall surface being disposed on the upstream side of the connection portion with the second flow path in the first direction; and a third wall surface facing the first wall surface in the second direction, the third wall surface being disposed on the downstream side of the connection portion with the second flow path in the first direction. The first wall surface, the second wall surface, and the third wall surface define the first flow path. The second wall surface is disposed at a position closer to the first wall surface than the third wall surface is in the second direction.

The present disclosure can provide a sensor device capable of suppressing inflow of dust into a second flow path in which a detection portion of a sensor chip is disposed.

### BRIEF DESCRIPTION OF THE DRAWINGS

FIG. 1 is a perspective view illustrating a sensor device according to a first embodiment.
FIG. 2 is a plan view illustrating a flow path-forming member.
FIG. 3 is an enlarged partial plan view illustrating a flow rectifying portion formed in a first flow path.
FIG. 4 is an enlarged partial plan view illustrating a connection portion between the first flow path and a second flow path.
FIG. 5 is a partial plan view illustrating an amount of wall protrusion and the width of the second flow path.
FIG. 6 is a cross-sectional view along an X-Z plane illustrating an opening at the connection portion between the first flow path and the second flow path.
FIG. 7 is a partial plan view illustrating an acceleration portion formed in the first flow path.
FIGS. 8A is a partial plan view illustrating a corner portion in a first modification.
FIG. 8B is a partial plan view illustrating a corner portion in a second modification.
FIG. 9A is a partial plan view illustrating a second opening and a third opening in a third modification.
FIG. 9B is a partial plan view illustrating a second opening and a fourth opening in a fourth modification.
FIG. 10 is an enlarged partial plan view illustrating a main portion of the flow path-forming member of the sensor device according to a second embodiment.
FIG. 11 is an enlarged partial plan view illustrating the main portion of the flow path-forming member of the sensor device according to a third embodiment.
FIG. 12 is a plan view illustrating the flow path-forming member of the sensor device according to a fourth embodiment.
FIG. 13 is a plan view illustrating the flow path-forming member of the sensor device according to a fifth embodiment.

### DESCRIPTION OF THE PREFERRED EMBODIMENTS

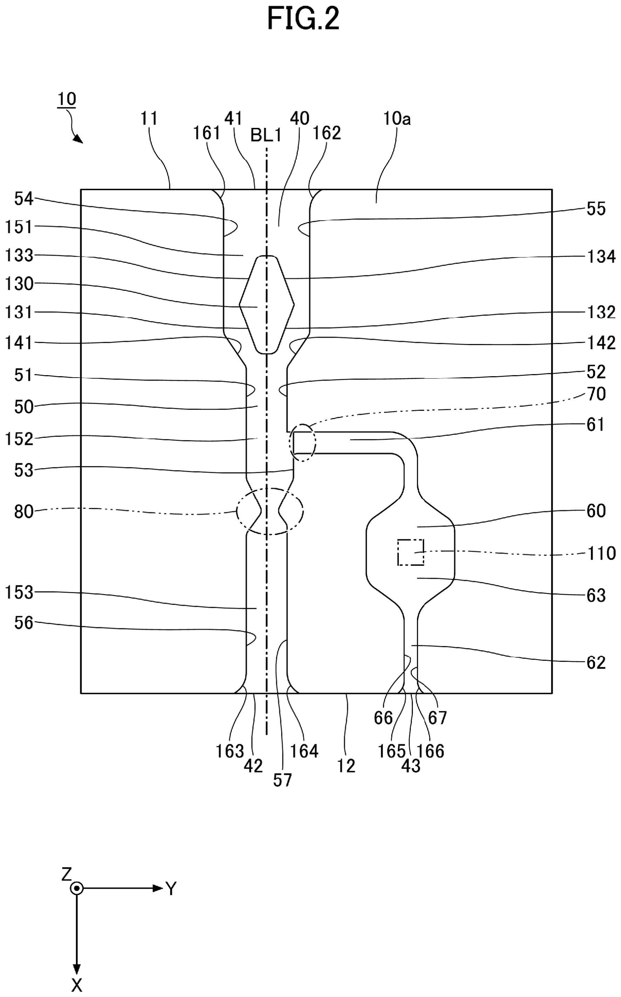

Hereinafter, a sensor device according to embodiments will be described with reference to the drawings. In the present specification and the drawings, substantially the same components are denoted by the same reference numerals, and thus redundant description will be omitted. In the present specification, the terms "upper" and "lower" may be used. These correspond to, for example, "up" and "down" in the state illustrated in FIG. 2. In the Z-axis direction, a side where a cover 30 is disposed relative to a substrate 20 is "up", and a side where a flow path-forming member 10 is disposed relative to the substrate 20 is "down". The actual arrangement of a sensor device 100 is not limited to the arrangement illustrated in FIG. 2.

### [Sensor Device 100 According to First Embodiment]

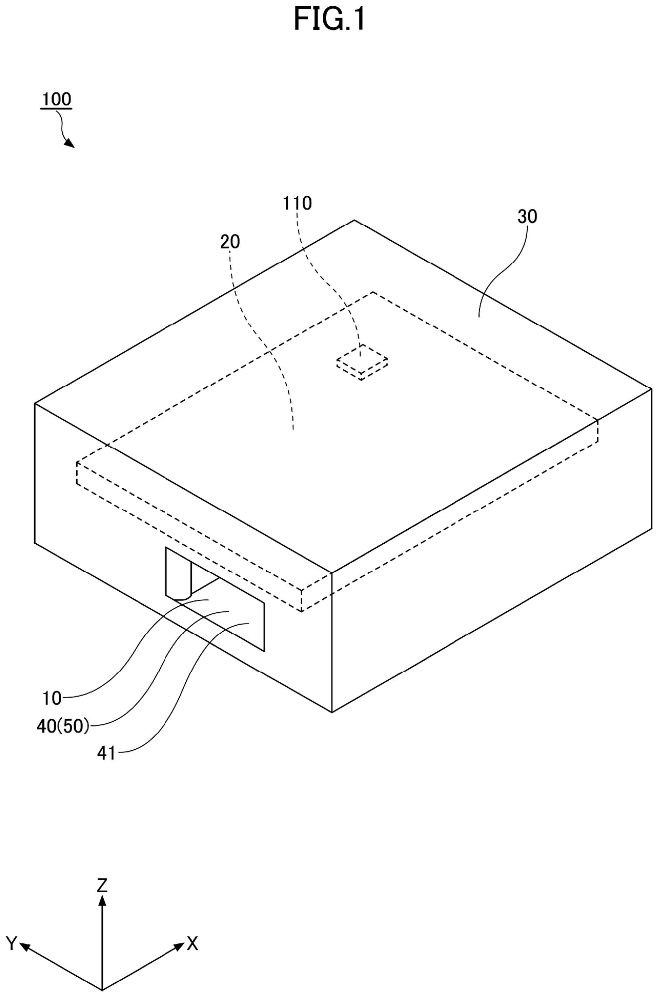

FIG. 1 is a perspective view illustrating the sensor device 100 according to a first embodiment. FIG. 2 is a plan view illustrating the flow path-forming member 10.

In each of the drawings, arrows indicating the X-axis direction, the Y-axis direction, and the Z-axis direction that are orthogonal to one another are illustrated. However, the X-axis direction, the Y-axis direction, and the Z-axis direction may not be orthogonal to one another. The X-axis direction, the Y-axis direction, and the Z-axis direction may be any direction. The X-axis direction includes a direction indicated by an arrow and a reverse direction thereof. The Y-axis direction includes a direction indicated by an arrow and a reverse direction thereof. The Z-axis direction includes a direction indicated by an arrow and a reverse direction thereof.

The sensor device 100 illustrated in FIG. 1 may be, for example, a flow rate sensor capable of detecting a flow rate of fluid flowing in a flow path. The sensor device 100 may be a flow velocity sensor capable of detecting a flow velocity of the fluid, a differential pressure sensor capable of detecting a differential pressure of the fluid, a pressure sensor capable of detecting a pressure of the fluid, or other sensors. The flow path to which the sensor device 100 is connected may include a duct, a pipe, or other flow paths. The fluid may include a gas or a liquid. The fluid may include powders (solids) such as dust. The gas may include, for example, air or other gas.

### [Substrate 20]

The sensor device 100 includes a flow path-forming member 10, a substrate 20, and a cover 30. A thickness direction of the substrate 20 is along the Z-axis direction. A sensor chip 110 is mounted on the substrate 20. The sensor chip 110 may include a portion in contact with the fluid. Wiring, electronic component(s), connection terminal(s), and the like are mounted on the substrate 20.

### [Sensor Chip 110]

The sensor chip 110 may be, for example, a flow sensor having a thermopile. The detection portion of the sensor chip 110 includes a detection surface in contact with the fluid. The sensor chip 110 may be a sensor element manufactured using MEMS technology. The "MEMS" is an abbreviation for Micro Electro Mechanical Systems. The detection portion of the sensor chip 110 is disposed along the X-Y plane and in contact with the fluid that flows in a detection region 63 described later. The sensor chip 110 outputs an electric signal corresponding to a flow rate of a detected fluid. The sensor chip 110 may output the electric signal corresponding to the flow rate of the detected fluid. The sensor chip 110 may output an electric signal corresponding to a differential pressure of the detected fluid.

### [Cover 30]

The cover 30 is disposed to cover the substrate 20. The cover 30 may be a housing for covering the substrate 20 and the flow path-forming member 10. The cover 30 may be formed to have a rectangular shape, for example, when viewed in the Z-axis direction. The shape of the cover 30 is not limited to rectangular, and may be circular, polygonal, or other shapes.

### [Path Flow-Forming Member 10]

The flow path-forming member 10 is disposed so as to overlap the substrate 20 in the Z-axis direction. The flow path-forming member 10 may be formed to have a substantially rectangular shape when viewed in the Z-axis direction.

The flow path-forming member 10 has a predetermined thickness in the Z-axis direction. As illustrated in FIG. 2, a flow path 40 through which the fluid flows is formed in the flow path-forming member 10. The flow path-forming member 10 has an upper surface 10a. The upper surface 10a is a surface in contact with the substrate 20 in the Z-axis direction. The flow path 40 includes groove(s) and recess(es) formed in the upper surface 10a. The flow path 40 is formed by contact between the upper surface 10a of the flow path-forming member 10 and a lower surface of the substrate 20. The flow path 40 may include groove(s) and recess(es) formed in a lower surface of the flow path-forming member 10. The sensor device 100 may include a plate-like member covering the lower surface of the flow path-forming member 10. The flow path-forming member 10 may be formed by overlapping a plurality of plate-like members.

The flow path-forming member 10 has side surfaces 11 and 12 facing each other in the X-axis direction. The side surfaces 11 and 12 may be surfaces along the Y-Z plane. When viewed in the Z-axis direction, the side surfaces 11 and 12 may be disposed to form two opposing sides of a rectangle. A first opening 41 is formed in the side surface 11, and a second opening 42 and a third opening 43 are formed in the side surface 12. The first opening 41 is an inlet of the flow path 40, and the second opening 42 and the third opening 43 serve as outlets of the flow path 40. The first opening 41 and the second opening 42 are disposed to face each other in the X-axis direction. The second opening 42 and the third opening 43 are spaced apart in the Y-axis direction.

### [First Flow Path 50]

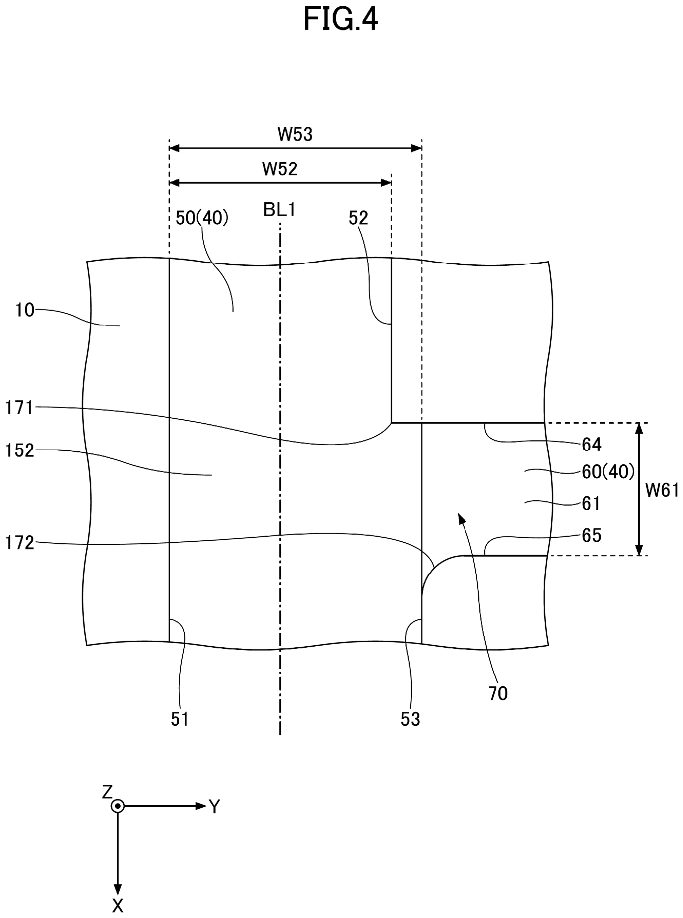

The flow path 40 has a first flow path 50 and a second flow path 60. The first flow path may be a main flow path, and the second flow path may be a secondary flow path. The first flow path 50 is a path extending in the X-axis direction from the first opening 41 to the second opening 42. In FIG. 4, a reference line BL1 along the direction in which the first flow path 50 extends is indicated by a dash-dotted line. The reference line BL1 is a virtual straight line extending in the X-axis direction. The reference line BL1 is basically positioned at the center of the first flow path 50 in the Y-axis direction. The center of the path may be the center between wall surfaces facing each other in the width direction of the path. The center between the wall surfaces may be offset from the reference line BL1. The width of the first flow path 50 is the width along the Y-axis direction.

The first flow path 50 includes, in the X-axis direction, a first portion 151 disposed near the first opening 41, a second portion 152 disposed downstream of the first portion 151, and a third portion 153 disposed downstream of the second portion 152 and disposed near the second opening 42.

### [First Portion 151 of First Flow Path 50]

The first portion 151 has wall surfaces 54 and 55 facing each other in the Y-axis direction. The wall surfaces 54 and 55 include surfaces along the X-Z plane. The wall surfaces 54 and 55 are formed symmetrically about a reference line BL1. The fluid that flows into the first flow path 50 from the first opening 41 flows between the wall surfaces 54 and 55.

Wall surfaces 161 and 162 that form the first opening 41 are formed to have an arc shape when viewed in the Z-axis direction. The wall surfaces 161 and 162 are spaced apart in the Y-axis direction. The first opening 41 is an opening between the wall surfaces 161 and 162. The wall surface 161 is formed so as to smoothly connect the side surface 11 and the wall surface 54. The wall surface 162 is formed to smoothly connect the side surface 11 and the wall surface 55. The wall surface 161 may include an inclined surface with respect to the side surface 11 and the wall surface 54, when viewed in the Z-axis direction. The wall surface 162 may include an inclined surface with respect to the side surface 11 and the wall surface 55, when viewed in the Z-axis direction. The wall surfaces 161 and 162 may be chamfered. The wall surfaces 161 and 162 may be formed to have an arc shape or to be linear. The wall surfaces 161 and 162 may include a plurality of curved surfaces having different curvatures.

The first portion 151 has inclined surfaces 141 and 142 facing in the Y-axis direction. The inclined surfaces 141 and 142 are examples of inclined portions. The inclined surface 141 is formed on a downstream side of the wall surface 54, and the inclined surface 142 is formed on a downstream side of the wall surface 55. The inclined surfaces 141 and 142 are inclined with respect to the reference line BL1. The inclined surfaces 141 and 142 are inclined so as to approach each other toward the downstream side. The first flow path 50 on the downstream side of the inclined surfaces 141 and 142 is narrower than the first flow path 50 on the upstream side of the inclined surfaces 141 and 142.

### [Flow rectifying portion 130]

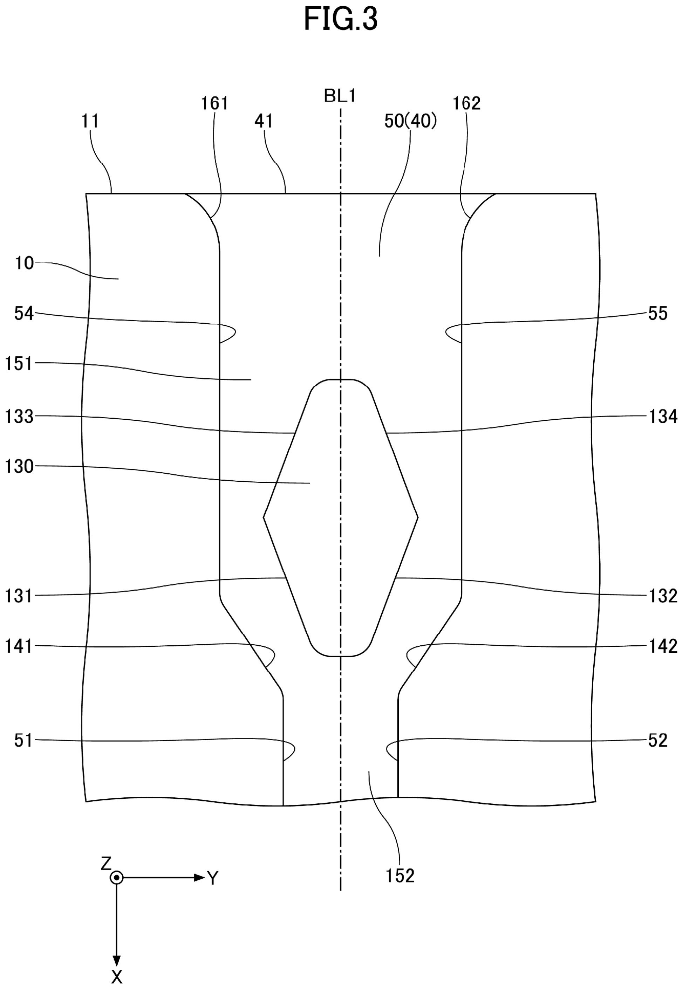

FIG. 3 is an enlarged partial plan view illustrating a flow rectifying portion 130 formed in the first flow path 50. As illustrated in FIGS. 2 and 3, the first portion 151 of the first flow path 50 is provided with the flow rectifying portion 130 that rectifies the flow of the fluid. The flow rectifying portion 130 is formed upstream of a connection portion 70 with the second flow path 60. The connection portion 70 is connected to the second portion 152 of the first flow path 50. The flow rectifying portion 130 may be disposed in the path to change the flow of the fluid. The flow rectifying portion 130 may be disposed in the flow path and may change the width of the flow path along the Y-axis direction. The flow rectifying portion 130 may change the width of the flow path in the Z-axis direction.

The flow rectifying portion 130 is formed to have a diamond shape when viewed in the Z-axis direction. The shape of the flow rectifying portion 130 is not limited to the diamond shape, and may be an elliptical shape, a plate shape, or any other shape. The flow rectifying portion 130 is formed symmetrically with respect to the reference line BL1 in the Y-axis direction. The flow rectifying portion 130 has first surfaces 131 and 132 and second surfaces 133 and 134 disposed along respective sides of the diamond shape. The flow rectifying portion 130 has the same shape in the Z-axis direction, and may have different shapes.

The first surface 131 is disposed to face the inclined surface 141, and the first surface 132 is disposed to face the inclined surface 142. The first surfaces 131 and 132 are disposed so as to be inclined with respect to the reference line BL1. Inclination angles of the first surfaces 131 and 132 with respect to the reference line BL1 may be different from inclination angles of the inclined surfaces 141 and 142 with respect to the reference line BL1.

The second surface 133 is formed upstream of the first surface 131 and is inclined with respect to the reference line BL1. The second surface 134 is formed upstream of the first surface 132 and is inclined with respect to the reference line BL1. The second surface 133 is spaced apart from the wall surface 54 in the Y-axis direction. The second surface 134 is spaced apart from the wall surface 55 in the Y-axis direction.

The fluid that flows into the first flow path 50 from the first opening 41 is divided by the flow rectifying portion 130. A portion of the fluid flows through a flow path between the wall surface 54 and the second surface 133. Also, a portion of the fluid flows through a flow path between the wall surface 55 and the second surface 134. The fluid flowing in the flow path between the wall surface 54 and the second surface 133 flows through a flow path between the first surface 131 and the inclined surface 141. Similarly, the fluid flowing through a flow path between the wall surface 55 and the second surface 134 flows through a flow path between the first surface 132 and the inclined surface 142. These flows merge and enter into the second portion 152 downstream. The fluid whose flow direction is rectified and in which generation of vortices is suppressed flows into the second portion 152.

### [Second Portion 152 of First Flow Path 50]

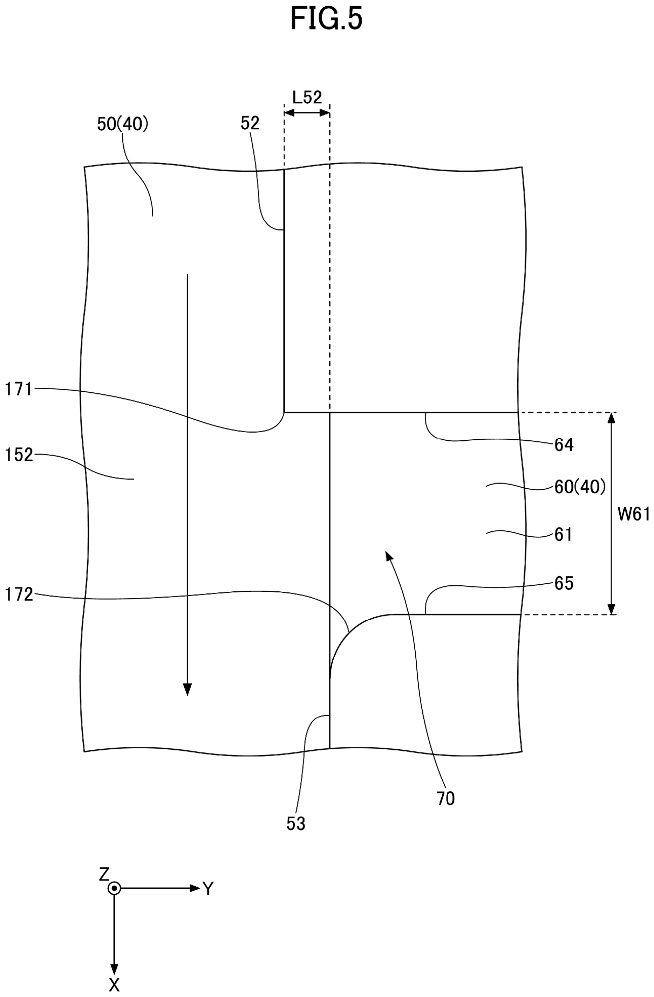

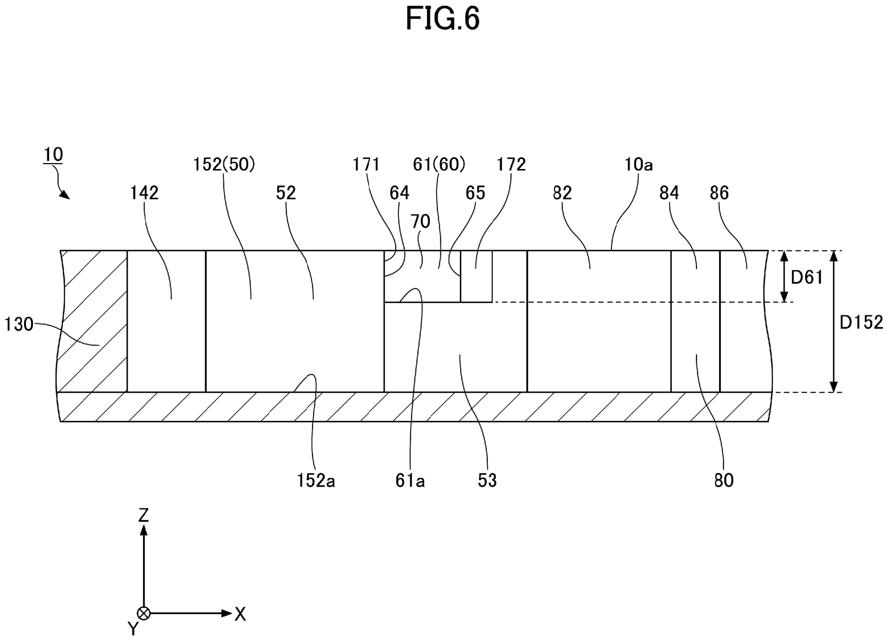

FIG. 4 is an enlarged partial plan view illustrating the connection portion 70 between the first flow path 50 and the second flow path 60. FIG. 5 is a partial plan view illustrating an overhang amount L52 of the wall surface 52 and a width W61 of the second flow path 60. FIG. 6 is a cross-sectional view taken along the X-Z plane illustrating the opening in the connection portion 70 between the first flow path 50 and the second flow path 60.

The second portion 152 illustrated in FIGS. 2, 4, 5, and 6 has a wall surface 51 and wall surfaces 52 and 53 that face each other in the Y-axis direction. The wall surfaces 51 and 52 face each other in the Y-axis direction. The wall surfaces 51 and 53 face each other in the Y-axis direction. The wall surface 51 is an example of a first wall surface, the wall surface 52 is an example of a second wall surface, and the wall surface 53 is an example of a third wall surface. The wall surfaces 51 to 53 include surfaces along the X-Z plane. As illustrated in FIGS. 2 and 4, the wall surface 51 is disposed on the left side of the drawing, and the wall surfaces 52 and 53 are disposed on the right side of the drawing.

The wall surface 51 is formed downstream of the inclined surface 141, and the wall surface 52 is formed downstream of the inclined surface 142. The wall surfaces 51 and 52 are formed symmetrically with respect to the reference line BL1. The fluid that flows into the second portion 152 from the first portion 151 flows between the wall surfaces 51 and 52. A second flow path 60 is connected to the second portion 152 of the first flow path 50.

The wall surface 53 is formed downstream of the wall surface 52. The wall surface 53 is offset from the wall surface 52 in the Y-axis direction. The wall surface 53 is disposed further from the wall surface 51 than the wall surface 52 is in the Y-axis direction. In the Y-axis direction, a width W53 between the wall surface 51 and the wall surface 53 is wider than a width W52 between the wall surface 51 and the wall surface 52. In other words, the width W52 between the wall surface 51 and the wall surface 52 is narrower than the width W53 between the wall surface 51 and the wall surface 53. The wall surface 52 is formed to extend closer to the wall surface 51 than the wall surface 53 does.

### [Acceleration Portion 80]

As illustrated in FIGS. 2, 6, and 7, an acceleration portion 80 is formed in the first flow path 50 downstream of the connection portion 70 and accelerates a flow velocity of the fluid. The acceleration portion 80 is disposed, for example, between the second portion 152 and the third portion 153 of the first flow path 50. The acceleration portion 80 may be a portion of the second portion 152 or a portion of the third portion 153. The acceleration portion 80 includes a reduced flow path in which a cross-sectional area perpendicular to the flow direction of the first flow path 50 is reduced. The acceleration portion 80 may be a pressure changing portion. The acceleration portion 80 may be an orifice.

An opening width of the acceleration portion 80 along the Y-axis direction is narrower than the opening widths on the upstream and downstream sides of the acceleration portion 80 when viewed in the Z-axis direction. A cross-sectional area of the acceleration portion 80 may be smaller than cross-sectional areas on the upstream and downstream sides. In the Z-axis direction, the opening width of the acceleration portion 80 may be narrower than the opening widths on the upstream and downstream sides of the acceleration portion 80. The depth of the first flow path 50 in the Z-axis direction may vary in the X-axis direction.

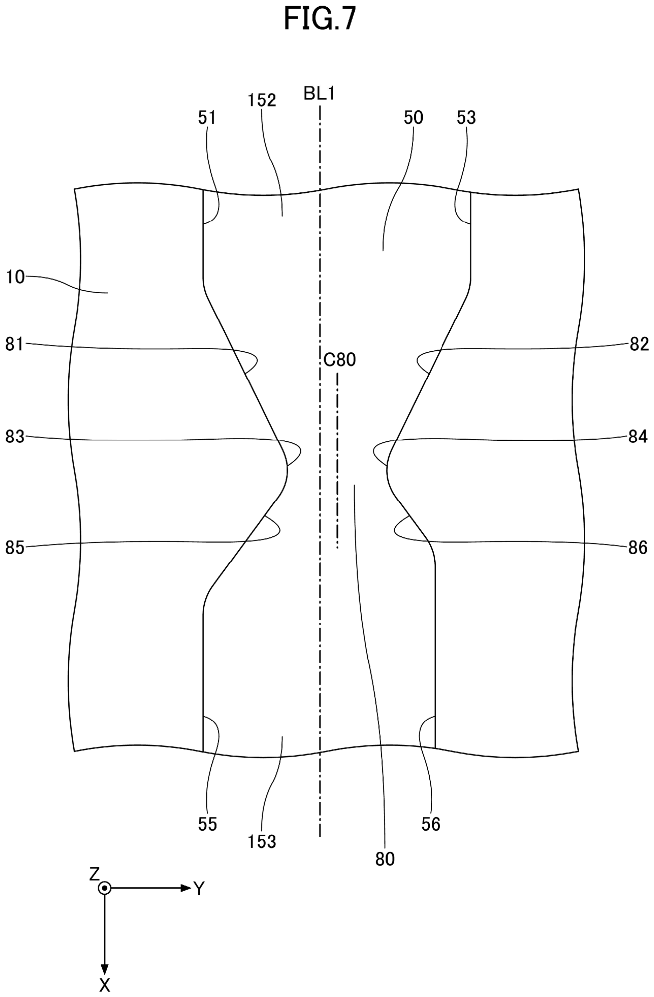

As illustrated in FIG. 7, the acceleration portion 80 has wall surfaces 81, 82, 83, 84, 85, and 86. The wall surfaces 81 and 82 face each other in the Y-axis direction. The wall surfaces 83 and 84 face each other in the Y-axis direction. The wall surfaces 85 and 86 face each other in the Y-axis direction.

The wall surface 81 is formed downstream of the wall surface 51, and the wall surface 82 is formed downstream of the wall surface 53. The wall surfaces 81 and 82 are inclined with respect to the reference line BL1. The wall surfaces 81 and 82 are inclined so as to approach each other toward the downstream side. The width of the first flow path 50 on the downstream side of the wall surfaces 81 and 82 is narrower than the width of the first flow path 50 on the upstream side of the wall surfaces 81 and 82.

The wall surface 83 is formed downstream of the wall surface 81, and the wall surface 84 is formed downstream of the wall surface 82. The wall surfaces 83 and 84 include the closest portions to each other in the acceleration portion 80. The wall surfaces 83 and 84 may be formed in an arc shape, linearly, or at an acute angle when viewed in the Z-axis direction. The wall surfaces 83 and 84 may form a vertex when viewed in the Z-axis direction.

In the Y-axis direction, a center C80 between the wall surfaces 83 and 84 is offset from the reference line BL1 toward the side where the second flow path 60 is formed. In other words, the center C80 between the wall surfaces 83 and 84 is positioned closer to the wall surfaces 53 and 56 relative to the reference line BL1. The center C80 between the wall surfaces 83 and 84 may be disposed on the reference line BL1.

The wall surface 85 is formed downstream of the wall surface 83, and the wall surface 86 is formed downstream of the wall surface 84. The wall surfaces 85 and 86 are inclined with respect to the reference line BL1. The wall surfaces 85 and 86 are inclined so as to separate from each other toward the downstream side. The first flow path 50 on the downstream side of the wall surfaces 85 and 86 is wider than the first flow path 50 on the upstream side of the wall surfaces 85 and 86.

### [Third Portion 153 of First Flow Path 50]

As illustrated in FIG. 2, the third portion 153 has wall surfaces 56 and 57 facing each other in the Y-axis direction. The wall surfaces 56 and 57 include a surface along the X-Z plane. The wall surfaces 56 and 57 are symmetrically formed with reference to the reference line BL1. A second opening 42 is formed downstream of the third portion 153. The fluid that flows through the acceleration portion 80 flows through the third portion 153 and flows out from the second opening 42 to the outside of the sensor device 100.

The wall surfaces 163 and 164 that define the second opening 42 are formed to have an arc shape when viewed in the Z-axis direction. The wall surfaces 163 and 164 are spaced apart in the Y-axis direction. The second opening 42 is an opening between the wall surfaces 163 and 164. The wall surface 163 is formed so as to smoothly connect the side surface 12 to the wall surface 56. The wall surface 164 is formed so as to smoothly connect the side surface 12 to the wall surface 57. The wall surface 163 may include inclined surfaces with respect to the side surface 12 and the wall surface 56, when viewed in the Z-axis direction. The wall surface 164 may include inclined surfaces inclined with respect to the side surface 12 and the wall surface 57, when viewed in the Z-axis direction. The wall surfaces 163 and 164 may be chamfered. The wall surfaces 163 and 164 may be formed to have an arc shape or to be linear. The wall surfaces 163 and 164 may include a plurality of curved surfaces having different curvatures.

### [Second Flow Path 60]

The second flow path 60 has a first portion 61 connected to the first flow path 50, and a second portion 62 that is provided downstream of the first portion 61 and that includes the detection region 63 in which the detection portion of the sensor chip 110 is disposed.

### [First Portion 61 of Second Flow Path 60]

The first portion 61 extends in the Y-axis direction and has a predetermined length. As illustrated in FIGS. 4 to 6, the first portion 61 includes the connection portion 70 connected to the first flow path 50. An opening serving as an inlet of the second flow path 60 is formed in the wall surface 53. The first portion 61 has wall surfaces 64 and 65 facing each other in the X-axis direction. The wall surface 64 is an example of a fourth wall surface, and the wall surface 65 is an example of a fifth wall surface. The wall surfaces 64 and 65 include surfaces along the Y-Z plane (surfaces perpendicular to the X-axis direction). The wall surface 64 is disposed upstream of the wall surface 65 in a flow direction of the first flow path 50. The fluid that flows into the second flow path 60 from the first flow path 50 flows between the wall surfaces 64 and 65.

A cross-sectional area of the first portion 61 of the second flow path 60 is smaller than a cross-sectional area of the second portion 152 of the first flow path 50. The cross-sectional area of the first portion 61 of the second flow path 60 is a cross-sectional area along the X-Z plane. The cross-sectional area of the second portion 152 of the first flow path 50 is a cross-sectional area along the Y-Z plane. As illustrated in FIG. 4, the width W61 of the path of the first portion 61 of the second flow path 60 is narrower than the widths W52 and W53 of the second portion 152 of the first flow path 50. The width W61 is a width between the wall surfaces 64 and 65 in the X-axis direction.

As illustrated in FIG. 6, a depth D61 of the first portion 61 of the second flow path 60 is smaller than a depth D152 of the second portion 152 of the first flow path 50. The depth D61 is a depth from the upper surface 10a to the lower surface 61a of the first portion 61. The depth D152 is the depth from the upper surface 10a to the lower surface 152a of the second portion 152.

As illustrated in FIGS. 4 and 5, the wall surface 64 extends further inward into the first flow path 50 than the wall surface 53 does in the Y-axis direction. The wall surface 64 extends further inward into the first flow path 50 than the wall surface 65 does in the Y-axis direction.

A corner portion 171 at which the wall surface 52 and the wall surface 64 intersect is formed, for example, at a right angle when viewed in the Z-axis direction. The corner portion 171 is not limited to being formed at a right angle, and may be formed, for example, at an acute angle.

A corner portion 172 at which the wall surface 53 and the wall surface 65 intersect is formed with a curved surface. The radius of curvature of the corner portion 172 may be greater than, for example, an overhang amount L52 of the wall surface 52. The wall surface 53 and the wall surface 65 are smoothly continuous through the corner portion 172 formed in an arc shape. The corner portion 172 may be chamfered and formed linearly.

### [Second Portion 62 of Second Flow Path 60]

As illustrated in FIG. 2, the second portion 62 bends from the first portion 61 and extends in the X-axis direction. The second portion 62 includes the detection region 63 in which the detection portion of the sensor chip 110 is disposed. The detection region 63 is formed to be in, for example, hexagonal shape when viewed in the Z-axis direction. The flow path of the detection region 63 is wider than flow paths upstream and downstream of the detection region 63. As described above, the detection portion is provided on the lower surface 20b of the substrate 20 and is disposed in the detection region 63.

The fluid that flows into the second flow path 60 flows through the first portion 61 and flows into the detection region 63 of the second portion 62. The detection portion detects the flow velocity of the fluid flowing through the detection region 63.

The second portion 62 is formed downstream of the detection region 63 and has wall surfaces 66 and 67 facing each other in the Y-axis direction. The wall surfaces 66 and 67 include surfaces along the X-Z plane. The fluid that flows through the detection region 63 flows between the wall surfaces 66 and 67 and is discharged from the third opening 43 to the outside of the sensor device 100.

The direction of the fluid that flows through the first flow path 50 and is discharged from the second opening 42 may be the same as the direction of the fluid that flows through the second flow path 60 and is discharged from the third opening 43.

The wall surfaces 165 and 166 that that define a third opening 43 are formed in an arc shape when viewed in the Z-axis direction. The wall surfaces 165 and 166 are spaced apart in the Y-axis direction. The third opening 43 is an opening between the wall surfaces 165 and 166. The wall surface 165 is formed so as to smoothly connect the side surface 12 to the wall surface 66. The wall surface 166 is formed so as to smoothly connect the side surface 12 to the wall surface 67. The wall surface 165 may include an inclined surface with respect to the side surface 12 and the wall surface 66, when viewed in the Z-axis direction. The wall surface 166 may include an inclined surface with respect to the side surface 12 and wall surface 67, when viewed in the Z-axis direction. The wall surfaces 165 and 166 may be chamfered. The wall surfaces 165 and 166 may be formed in an arc shape or may be formed linearly. The wall surfaces 165 and 166 may include a plurality of curved surfaces having different curvatures.

### [Flow of Dust in Second Portion 152 of First Flow Path 50]

Flow of dust in the second portion 152 of the first flow path 50 will now be described with reference to FIGS. 4 and 5. Fluid flowing in the flow path 40 of the sensor device 100 may include dust. The dust flows with the fluid. The fluid flowing in the second portion 152 flows in the X-axis direction.

Dust flowing in the vicinity of the wall surface 51 flows along the wall surface 51 in the X-axis direction. Dust flowing in the vicinity of the wall surface 52 flows along the wall surface 52 in the X-axis direction. Dust flowing in the vicinity of the wall surface 53 flows along the wall surface 53 in the X-axis direction. Dust flowing through the second portion 152 continues the motion (movement) in the X-axis direction according to the law of inertia.

A portion of the dust flowing along the wall surface 52 flows in the X-axis direction while moving in a direction approaching the wall surface 53 in the Y-axis direction. A portion of the dust flowing along the wall surface 52 collides with the corner portion 172. Since a portion of the dust near the corner portion 172 flows in the X-axis direction along the wall surface 53, an amount of dust flowing into the second flow path 60 can be suppressed.

In the sensor device 100, since the wall surface 53 is formed so as to be offset outward in the Y-axis direction with respect to the wall surface 52, the amount of dust flowing into the second flow path 60 can be suppressed compared to a case where the wall surface 53 on the downstream side of the connection portion 70 and the wall surface 52 on the upstream side of the connection portion 70 are formed at the same position in the Y-axis direction.

### [Effects of Sensor Device 100 According to First Embodiment]

The sensor device 100 according to the first embodiment includes a flow path-forming member 10 in which a flow path 40 is formed, and the flow path 40 has a first flow path 50 extending from a first opening 41 to a second opening 42 in the X-axis direction (first direction); and a second flow path 60 branching from the first flow path 50 and in which a detection portion of a sensor chip 110 is disposed. The flow path-forming member 10 has a wall surface (first wall surface) 51, a wall surface (second wall surface) 52, and a wall surface (third wall surface) 53 forming the first flow path (50). The wall surface 51 is formed continuously from an upstream side to a downstream side of a connection portion 70 in the X-axis direction, the wall surface 52 faces the wall surface 51 in the Y-axis direction (second direction) and is formed on the upstream side of the connection portion 70 in the X-axis direction, the wall surface 53 faces the wall surface 51 in the Y-axis direction and is formed on the downstream side of the connection portion 70 in the X-axis direction, and the wall surface 52 is formed at a position closer to the wall surface 51 than the wall surface 53 in the Y-axis direction.

In such a sensor device 100, a portion of the fluid flowing through the first flow path 50 flows into the second flow path 60. The detection portion of the sensor chip 110 detects a flow velocity of the fluid flowing in the second flow path 60. The wall surface 52 formed upstream of the connection portion 70 is disposed closer to the wall surface 51 in the Y-axis direction than the wall surface 53 formed downstream of the connection portion 70. In other words, the wall surface 53 is disposed further away from the wall surface 51 than the wall surface 52. As a result, the fluid on the upstream side of the connection portion 70 flows in the X-axis direction and maintains the motion by the law of inertia. Since the wall surface 53 downstream of the connection portion 70 is formed outward of the wall surface 52 in the Y-axis direction, dust flowing into the second flow path 60 can be suppressed. In such a sensor device 100, compared with a case where a wall surface downstream of the connection portion 70 is formed at the same position as the wall surface 52 upstream in the Y-axis direction, dust flowing into the second flow path 60 from the first flow path 50 can be suppressed.

In addition, since an acceleration portion 80 is formed downstream of the connection portion 70 in the sensor device 100, a flow velocity of the fluid flowing through the acceleration portion 80 can be accelerated. As a result, the pressure of the fluid on the upstream side of the acceleration portion 80 can be kept high. In this case, the fluid flows easily from the first flow path 50 to the second flow path 60. In the sensor device 100, a flow rate of the fluid flowing into the second flow path 60 can be adjusted by changing (adjusting) the shape of the acceleration portion 80.

In the sensor device 100, the cross-sectional area of the connection portion 70 in the second flow path 60 is smaller than the cross-sectional area between the wall surface 51 and the wall surface 52 in the first flow path 50. By making the cross-sectional area of the connection portion 70 smaller than the cross-sectional area of the first flow path 50 that is a connection source, the inflow of dust from the first flow path 50 to the second flow path 60 can be suppressed.

In the sensor device 100, the flow path-forming member 10 defines the connection portion 70 in the second flow path 60, and has a wall surface (fourth wall surface) 64 and a wall surface (fifth wall surface) 65 that include surfaces perpendicular to the X-axis direction and facing each other in the X-axis direction, the wall surface 64 is disposed on the upstream side of the connection portion 70 in the X-axis direction, the wall surface 65 is disposed on the downstream side of the connection portion 70 in the X-axis direction, and a corner portion 171 at which a wall surface 52 and the wall surface 64 intersect is formed to have an acute angle or a right angle when viewed in the Z-axis direction (the thickness direction of the flow path-forming member 10). By having such a corner portion 171, it is possible to suppress the inflow of dust flowing along the wall surface 52 into the second flow path 60.

In the sensor device 100, a corner portion 172 where the wall surface 53 and the wall surface 65 intersect is chamfered or formed with a curved surface. This suppresses dust from adhering to and accumulating on the corner portion 172. Obstruction of the flow of fluid due to the accumulation of dust can be suppressed, thereby improving the reliability of the sensor device 100.

In the sensor device 100, the second flow path 60 has a first portion 61 branching from the first flow path 50 and extending in the Y-axis direction. The first portion 61 includes the connection portion 70, and a third opening 43 for discharging the fluid flowing through the second flow path 60 is formed in the flow path-forming member 10. In the sensor device 100 having such a structure, a second opening 42 and the third opening 43 can be provided as outlets of the flow path 40. The fluid flowing through the first flow path 50 is discharged from the second opening 42, and the fluid flowing through the second flow path 60 is discharged from the third opening 43. In the sensor device 100 having such a structure, it is not necessary to adopt a structure in which the fluid that has flowed through the second flow path 60 rejoins the first flow path 50. Therefore, there is no possibility that dust that has flowed through the second flow path 60 flows back to the first flow path 50.

In the sensor device 100, the second flow path 60 has a second portion 62 that bends from a first portion 61 and that extends in the X-axis direction, and the second portion 62 has a third opening 43 that is formed downstream of the second portion 62 and that includes the detection region 63 where the detection portion of the sensor chip 110 is disposed. In the sensor device 100 having such a structure, the fluid that has flowed through the first portion 61 flows into the second portion 62, flows in the X-axis direction, and is discharged from the third opening 43 downstream to the outside of the sensor device 100. Dust that has flowed through the second flow path 60 is discharged from the third opening 43 to the outside of the sensor device 100, and the dust does not flow back to the first flow path 50.

In the sensor device 100, the third opening 43 is formed to discharge fluid in the X-axis direction (first direction). In the sensor device 100 having such a structure, the fluid that has flowed through the first flow path 50 is discharged from the second opening 42 in the X-axis direction, and the fluid that has flowed through the second flow path 60 is discharged from the third opening 43 in the X-axis direction. Both a direction of the fluid discharged from the second opening 42 and a direction of the fluid discharged from the third opening 43 can be matched. As a result, the influence of the fluid flowing outside the sensor device 100 can be suppressed. Further, the backflow of the fluid that has flowed through the second flow path 60 to the first flow path 50 can be suppressed. In the sensor device 100, the backflow of dust from the second flow path 60 to the first flow path 50 can be suppressed.

In the sensor device 100, the acceleration portion 80 includes a reduced flow path in which the cross-sectional area intersecting with a flow direction of the first flow path 50 is reduced. The flow velocity is accelerated by making the cross-sectional area of the acceleration portion 80 smaller than the cross-sectional areas of the flow paths on the upstream and downstream sides of the acceleration portion 80. In the sensor device 100, the pressure of the fluid can be adjusted by the acceleration portion 80, and a flow rate from the first flow path 50 to the second flow path 60 can be easily adjusted.

In the sensor device 100, the first flow path 50 includes a flow rectifying portion 130 that is formed upstream of the connection portion 70 and that rectifies the fluid flow, and inclined surfaces (inclined portions) 141 and 142 that are formed upstream of the connection portion 70 and that are inclined toward a reference line (center) BL1 of the first flow path 50 when viewed in the Z-axis direction. The flow rectifying portion 130 has first surfaces 131 and 132 that face the inclined surfaces 141 and 142.

In the sensor device 100 having such a structure, by providing the inclined surfaces 141 and 142 to reduce the cross-sectional area of the flow path, the flow velocity is accelerated to cause dust to flow in the X-axis direction. As a result, the flow velocity of dust passing immediately before the connection portion 70 can be increased, and an amount of dust flowing into the second flow path 60 can be reduced. Further, the flow rectifying portion 130 rectifies the fluid flowing through the first flow path 50 to suppress the generation of vortices. As a result, the fluid flows easily along the X-axis direction, and thus the inflow of dust into the second flow path 60 can be suppressed. Further, since the flow rectifying portion 130 is formed on the upstream side of the connection portion 70, the flow rectifying portion 130 is disposed so as not to face the opening that serves as the inlet to the second flow path 60. This prevents dust from colliding with flow rectifying portion 130 and flowing into the second flow path 60.

In the sensor device 100, the flow rectifying portion 130 has second surfaces 133 and 134 formed upstream of the first surfaces 131 and 132 and inclined with respect to the X-axis direction (first direction). By providing the second surfaces 133 and 134 inclined with respect to the X-axis direction on the upstream side of the first surfaces 131 and 132, the flow of the fluid can be rectified by the second surfaces 133 and 134 before the fluid flows into a flow path in contact with the first surfaces 131 and 132, and the flow of the fluid can be further rectified by the first surfaces 131 and 132.

In the sensor device 100, the flow rectifying portion 130 is formed symmetrically in the Y-axis direction with respect to a reference line BL extending in the X-axis direction. In the sensor device 100 having such a structure, even if the flow of the fluid flowing into the vicinity of the flow rectifying portion 130 is inclined with respect to the reference line BL1, the flow of the fluid can be easily rectified.

In the sensor device 100, the flow rectifying portion 130 is formed to have a diamond shape when viewed in the Z-axis direction. The first surfaces 131 and 132 and the second surfaces 133 and 134 are disposed to form a diamond shape. Portions that form acute angles of the diamond is disposed so as to face the X-axis direction. As a result, the portion where the second surfaces 133 and 134 on the upstream side intersect forms an acute angle, and accumulation of dust can be suppressed.

In the sensor device 100, the center of the first opening 41 in the Y-axis direction, the center of the flow rectifying portion 130 in the Y-axis direction, and the center of the second opening 42 in the Y-axis direction are disposed on the reference line (the same virtual straight line) BL1. As a result, the fluid and dust that are rectified by the flow rectifying portion 130 flow linearly, and the dust can be easily discharged from the second opening 42 to the outside.

In the sensor device 100, the wall surfaces 161 and 162 that define the first opening 41 are formed to have an arc shape when viewed in the Z-axis direction. As a result, the side surface 11 on an inlet side of the sensor device 100, and the wall surfaces 54 and 55 of the first flow path 50 can be smoothly connected, and thus generation of vortices at the inlet of the first flow path 50 can be suppressed. Further, in the sensor device 100, fluid flowing at an angle to the X-axis direction can easily flow into the first flow path 50.

In the sensor device 100, the center C80 of the acceleration portion 80 in the Y-axis direction (center in a second direction) is offset from the reference line BL1. In the sensor device 100, an offset amount of the center C80 of the acceleration portion 80 in the Y-axis direction may be adjusted to control the flow rate of the fluid flowing into the second flow path 60. Since the center C80 of the acceleration portion 80 is offset from the reference line BL1, the influence can be suppressed when the flow direction of the fluid flowing into the flow path 40 from the outside of the sensor device 100 is oblique to the reference line BL1.

### [Corner Portion 171B of Sensor Device 100 in First Modification]

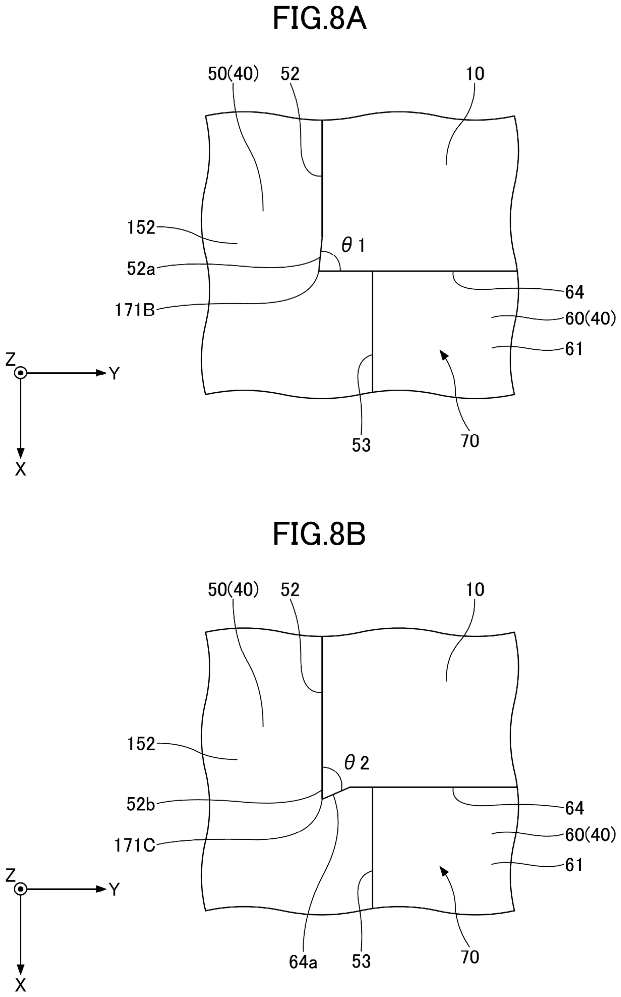

Next, a corner portion 171B of the sensor device 100 in a first modification will be described with reference to FIG. 8A. FIG. 8A is a partial plan view illustrating the corner portion 171B in the first modification. The corner portion 171B is a corner portion where the wall surface 52 and the wall surface 64 intersect. An angle θ1 of the corner portion 171B may be an acute angle. A tip portion 52a of the wall surface 52 is inclined with respect to the X-axis direction. The tip portion 52a is inclined inward (toward the center in width direction, reference line BL1) in the Y-axis direction. As described above, the angle θ1 of the corner portion 171B may be an acute angle.

[Corner Portion 171C of Sensor Device 100 in Second Modification] Next, a corner portion 171C of the sensor device 100 in a second modification will be described with reference to FIG. 8B. FIG. 8B is a partial plan view illustrating the corner portion 171C in the second modification. The corner portion 171C is a corner portion where the wall surface 52 and the wall surface 64 intersect. An angle θ2 of the corner portion 171C may be an acute angle. A tip portion 52b of the wall surface 52 extends further downstream than the wall surface 64 in the X-axis direction. A tip portion 64a of the wall surface 64 is inclined with respect to the Y-axis direction. The tip portion 64a is an end portion of the wall surface 64 closer to the wall surface 52. The tip portion 64a extends further than a downstream portion of the wall surface 64 in the second flow path 60. As described above, the angle θ2 of the corner portion 171C may be an acute angle.

### [Second Opening 42 and Third Opening 43B of Sensor Device 100 in Third Modification]

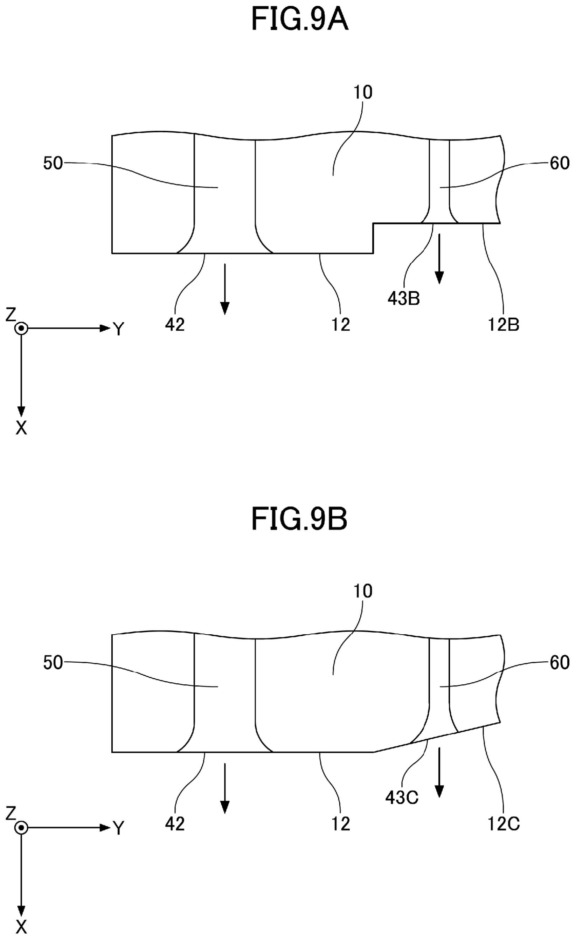

Next, a second opening 42 and a third opening 43B of the sensor device 100 in a third modification will be described with reference to FIG. 9A. FIG. 9A is a partial plan view illustrating the second opening 42 and the third opening 43B in the third modification. The third opening 43B is disposed at a position different from the second opening 42 in the X-axis direction. The flow path-forming member 10 in the third modification has a side surface 12B disposed at a position different from the side surface 12 in the X-axis direction. The third opening 43B is formed on the side surface 12B. The side surface 12B may be formed to be recessed inward relative to the side surface 12, or may be formed to extend outward relative to the side surface 12. The side surface 12B includes a surface along the X-Z plane. The third opening 43B may not be formed at the same position as the second opening 42 in the X-axis direction.

### [Second Opening 42 and Third Opening 43C of Sensor Device 100 in Fourth Modification]

Next, a second opening 42 and a third opening 43C of the sensor device 100 in a fourth modification will be described with reference to FIG. 9B. FIG. 9B is a partial plan view illustrating the second opening 42 and the third opening 43C in the fourth modification. The flow path-forming member 10 in the fourth modification has a side surface 12C inclined with respect to the Y-axis direction. The third opening 43C is formed on the side surface 12C. The third opening 43C according to fourth modification may be formed on the side surface 12C inclined with respect to the side surface 12, when viewed in the Z-axis direction.

### [Second Opening 42 and Third Opening of Sensor Device 100 in Fifth Modification]

The sensor device 100 in a fifth modification may have a third opening formed on a side surface along the X-Z plane. The fluid flowing through the second flow path 60 may be discharged in the Y-axis direction from the third opening. In the sensor device 100 in the fifth modification, the fluid flowing through the first flow path 50 may be discharged in the X-axis direction from the second opening 42, and the fluid flowing through the second flow path 60 may be discharged in the Y-axis direction from the third opening. The fluid discharged from the third opening 43 is discharged in a direction different from the fluid discharged from the second opening 42, and the fluid flowing through the second flow path 60 is prevented from flowing into the first flow path 50. In such a sensor device 100, the reverse flow in the first flow path 50 is prevented.

### [Sensor Device 100 According to Second Embodiment]

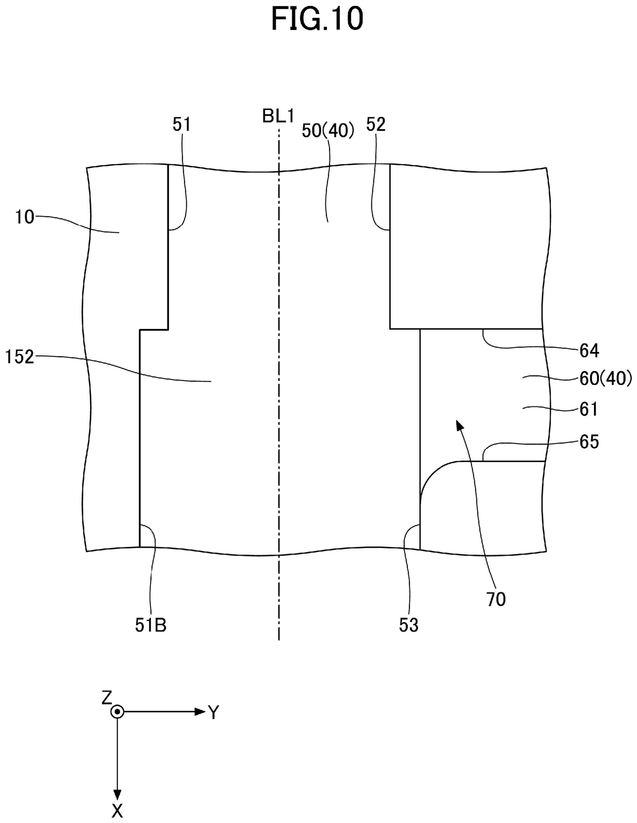

Next, the sensor device 100 according to a second embodiment will be described with reference to FIG. 10. FIG. 10 is an enlarged partial plan view illustrating a main portion of the flow path-forming member 10 of the sensor device 100 according to the second embodiment. The sensor device 100 according to the second embodiment differs from the sensor device 100 according to the first embodiment in that the second portion 152 of the first flow path 50 has a wall surface 51B disposed outside the wall surface 51. In the description of the sensor device 100 according to the second embodiment, the same description as that of the sensor device 100 according to the first embodiment is omitted.

Wall surfaces 51B and 53 face each other in the Y-axis direction. The wall surface 51B is offset from the wall surface 51 in the Y-axis direction. The wall surface 51B includes a surface along the X-Z plane. The wall surface 51B facing an opening that serves as the inlet of the second flow path 60 in the Y-axis direction may not be formed at the same position as the wall surface 51.

### [Sensor Device 100 According to Third Embodiment]

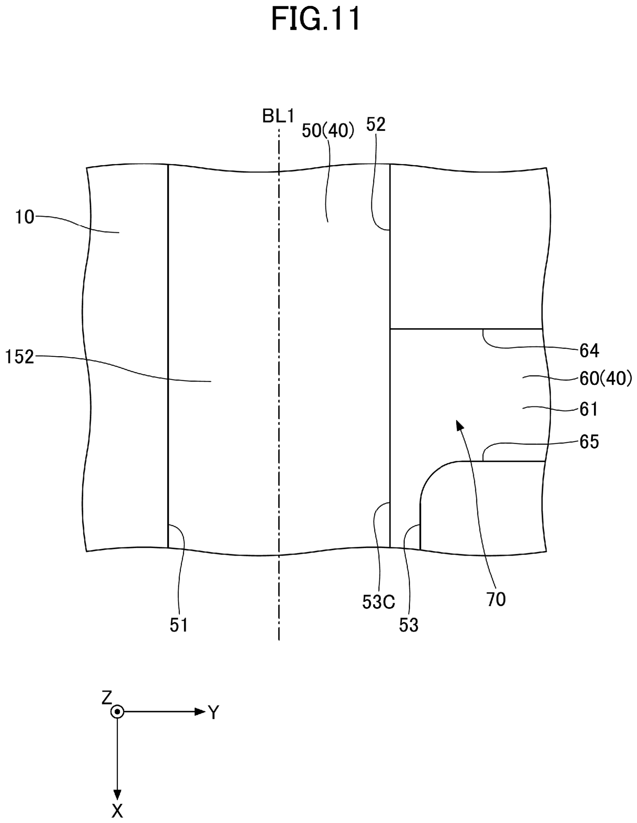

Next, the sensor device 100 according to a third embodiment will be described with reference to FIG. 11. FIG. 11 is an enlarged partial plan view illustrating a main portion of the flow path-forming member 10 of the sensor device 100 according to Embodiment 3. The sensor device 100 according to the third embodiment differs from the sensor device 100 according to the first embodiment in that the second portion 152 of the first flow path 50 includes a wall surface 53C that extends downstream from the wall surface 52. In the description of the sensor device 100 according to the third embodiment, the same description as that of the sensor device 100 according to the first embodiment is omitted.

A wall surface 51 and wall surfaces 53 and 53C face each other in the Y-axis direction. The wall surface 53 is formed in the Z-axis direction at a position corresponding to an opening that serves as an inlet of the second flow path 60. The wall surface 53C is formed below the opening of the second flow path 60 in the Z-axis direction. The wall surfaces 53 and 53C are offset from each other in the Y-axis direction. The wall surface 53C is formed so as to be continuous with the wall surface 52. In this way, the wall surface 53C downstream of the connection portion 70 of the second flow path 60 may be formed so as to be continuous with the wall surface 52.

### [Sensor Device 100D According to Fourth Embodiment]

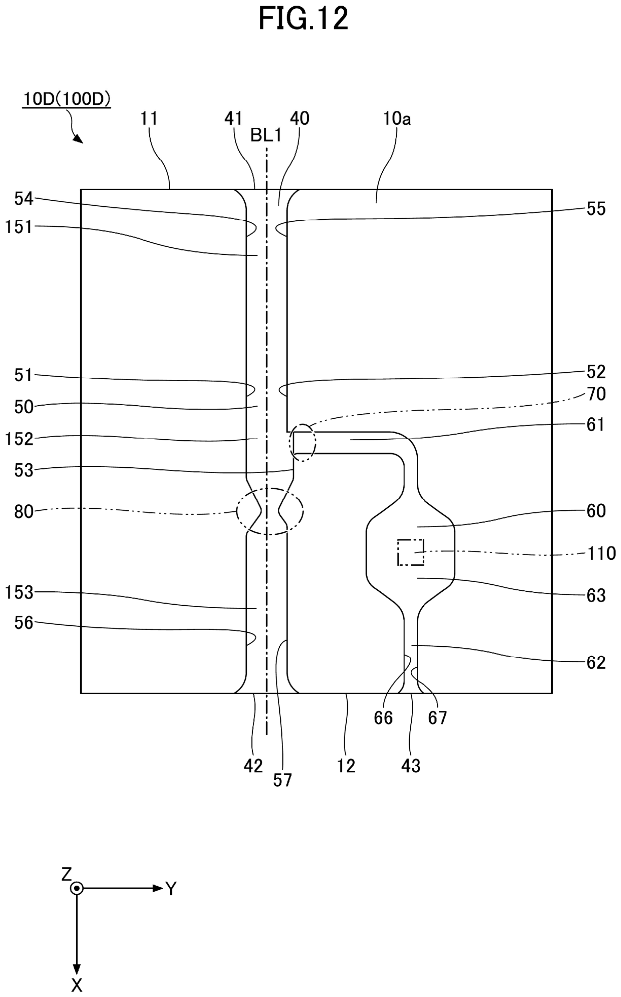

Next, a sensor device 100D according to a fourth embodiment will be described with reference to FIG. 12. FIG. 12 is a plan view illustrating a flow path-forming member 10D of the sensor device 100D according to the fourth embodiment. The sensor device 100D according to the fourth embodiment differs from the sensor device 100 according to the first embodiment in that the sensor device 100D includes the flow path-forming member 10D in which a flow rectifying portion 130 and inclined surfaces 141 and 142 are not formed. In the description of the sensor device 100D according to the fourth embodiment, the same description as that of the sensor device 100 according to the first embodiment is omitted.

In the flow path-forming member 10D, the flow rectifying portion 130 and the inclined surfaces 141 and 142 are not formed. The wall surfaces 54 and 51 may be formed at the same position in the Y-axis direction. The wall surfaces 55 and 52 may be formed at the same position in the Y-axis direction. As described above, in the sensor device 100D according to the fourth embodiment, the flow rectifying portion 130 and the inclined surface 141 and 142 are not formed.

### [Sensor Device 100E According to Fifth Embodiment]

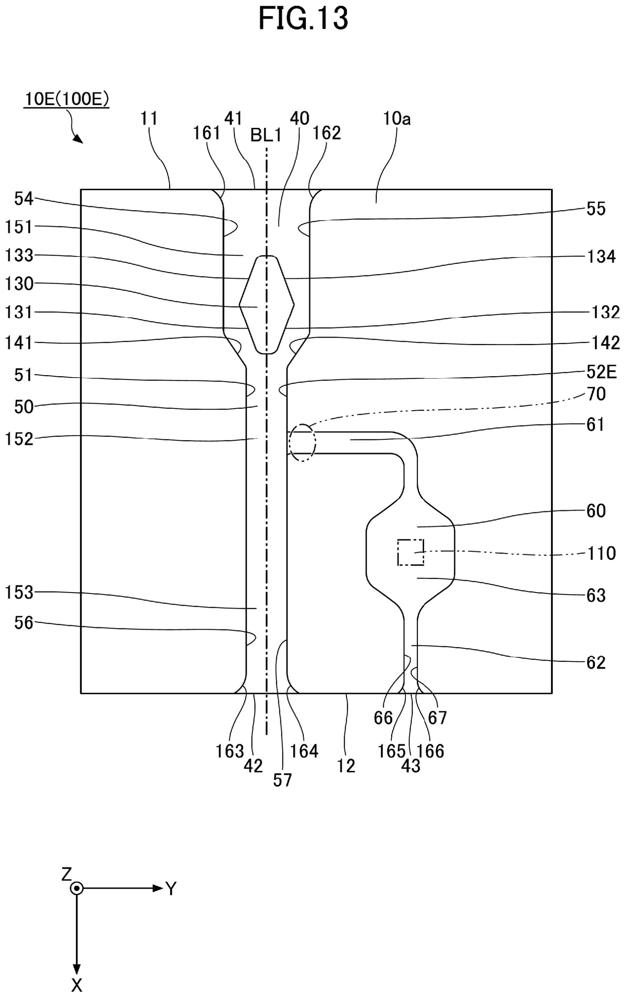

Next, a sensor device 100E according to a fifth embodiment will be described with reference to FIG. 13. FIG. 13 is a plan view illustrating a flow path-forming member 10E of the sensor device 100E according to the fifth embodiment. The sensor device 100E according to the fifth embodiment differs from the sensor device 100 according to the first embodiment in that the sensor device 100E includes the flow path-forming member 10E in which a wall surface (second wall surface) 52E is formed downstream of the connection portion 70. In the description of the sensor device 100E according to the fifth embodiment, the same description as that of the sensor device 100 according to the first embodiment is omitted.

In the flow path-forming member 10E, a wall surface 53 is not formed, and the wall surface 52E is formed continuously from the upstream side to the downstream side of the connection portion 70. The wall surface 52E faces the wall surface 51 in the Y-axis direction. The width between the wall surface 51 and the wall surface 52E may be uniform on the upstream side and the downstream side of the connection portion 70. As described above, in the sensor device 100E according to the fifth embodiment, the wall surface 53 is not formed.

In the sensor device 100E according to the fifth embodiment, the first flow path 50 includes a flow rectifying portion 130 that is formed upstream of the connection portion 70 and that rectifies the flow of the fluid, and inclined surfaces (inclined portion) 141 and 142 that are formed upstream of the connection portion 70 and that are inclined toward the reference line (center) BL1 of the first flow path 50 when viewed in the Z-axis direction. The flow rectifying portion 130 has first surfaces 131 and 132 that face the inclined surfaces 141 and 142.

In the sensor device 100E having such a structure, by providing the inclined surfaces 141 and 142 to reduce the cross-sectional area of the flow path, the flow velocity is accelerated and dust flows in the X-axis direction. As a result, the flow velocity of dust passing immediately before the connection portion 70 can be increased, and the amount of dust flowing into the second flow path 60 can be reduced. Further, the fluid flowing through the first flow path 50 is rectified by the flow rectifying portion 130 to suppress the generation of vortices. As a result, the fluid flows easily along the X-axis direction, and thus the inflow of dust into the second flow path 60 can be suppressed. Further, since the flow rectifying portion 130 is formed on the upstream side of the connection portion 70, the flow rectifying portion 130 is disposed so as not to face the opening that serves as the inlet to the second flow path 60. This prevents dust from colliding with the flow rectifying portion 130 and flowing into the second flow path 60.

Other embodiments in which other components or the like are combined with the configurations described in the above embodiments are also adopted, and the present disclosure is not limited in any way to the above configurations. In this regard, modifications or the like can be made without departing from the gist of the present disclosure, and appropriate changes can be determined according to the application.

The present disclosure may provide the following:
1. A sensor device comprising:
   a flow path-forming member including a flow path, the flow path including:
      a first flow path extending from a first opening to a second opening in a first direction, and
      a second flow path branching from the first flow path and in which a detection portion of a sensor chip is disposed,
   wherein the first flow path includes:
      a flow rectifying portion disposed upstream of a connection portion between the first flow path and the second flow path, the flow rectifying portion being configured to rectify a flow of fluid flowing through the first flow path, and
      an inclined portion that is disposed upstream of the connection portion and is inclined toward a center of the first flow path when viewed in a thickness direction of the flow path-forming member, and
   wherein the flow rectifying portion has a first surface facing the inclined portion.
2. The sensor device according to claim 1, wherein the flow rectifying portion has a second surface that is disposed upstream of the first surface and is inclined with respect to the first direction.
3. The sensor device according to claim 2, wherein the flow rectifying portion is symmetrically formed in a second direction with respect to a reference line extending in the first direction, the second direction being perpendicular to the first direction.
4. The sensor device according to claim 3, wherein the flow rectifying portion is formed to have a rhombic shape when viewed in the thickness direction of the flow path-forming member.
5. The sensor device according to any one of claims 1 to 4, wherein a center of the first opening in a second direction perpendicular to the first direction, a center of the flow rectifying portion in the second direction, and a center of the second opening in the second direction are disposed on a same virtual straight line.
6. The sensor device according to any one of claims 1 to 4, further comprising:
   a wall surface defining the first opening, wherein the wall surface has an arc shape when viewed in the thickness direction of the flow path-forming member, or is chamfered.
7. The sensor device according to claim 5, wherein the first flow path includes an acceleration portion disposed downstream of the connection portion with the second flow path, the acceleration portion being configured to accelerate a flow velocity of the fluid, and
   wherein a center of the acceleration portion in the second direction is offset from the virtual straight line.
8. The sensor device according to claim 7, wherein a cross-sectional area of the acceleration portion perpendicular to a flow direction of the first flow path is reduced.

## Claims

1. A sensor device (100) comprising:
a flow path-forming member (10) including a flow path (40), the flow path including:
a first flow path (50) extending from a first opening (41) to a second opening (42) in a first direction, and
a second flow path (60) branching from the first flow path and in which a detection portion of a sensor chip is disposed,
wherein the flow path-forming member (10) includes:
a first wall surface (51) formed continuously from an upstream side to a downstream side of a connection portion with the second flow path in the first direction,
a second wall surface (52) facing the first wall surface in a second direction perpendicular to the first direction, the second wall surface being disposed on the upstream side of the connection portion with the second flow path in the first direction, and
a third wall surface (53) facing the first wall surface in the second direction, the third wall surface being disposed on the downstream side of the connection portion with the second flow path in the first direction,
wherein the first wall surface, the second wall surface, and the third wall surface define the first flow path, and
wherein the second wall surface is disposed at a position closer to the first wall surface than the third wall surface is in the second direction.

2. The sensor device according to claim 1, wherein a cross-sectional area of the connection portion in the second flow path is smaller than a cross-sectional area between the first wall surface and the second wall surface in the first flow path.

3. The sensor device according to claim 1 or 2, wherein the flow path-forming member defines the connection portion in the second flow path and includes a fourth wall surface and a fifth wall surface that include surfaces perpendicular to the first direction, the fourth wall surface and the fifth wall surface facing each other in the first direction,
wherein the fourth wall surface is disposed upstream of the connection portion in the first direction, and the fifth wall surface is disposed downstream of the connection portion in the first direction, and
wherein a corner portion at which the second wall surface and the fourth wall surface intersect is formed to have an acute angle or a right angle when viewed in a thickness direction of the flow path-forming member.

4. The sensor device according to claim 1 or 2, wherein the flow path-forming member defines the connection portion in the second flow path and includes a fourth wall surface and a fifth wall surface that include surfaces perpendicular to the first direction, the fourth wall surface and the fifth wall surface facing each other in the first direction,
wherein the fourth wall surface is disposed upstream of the connection portion in the first direction, and the fifth wall surface is disposed downstream of the connection portion in the first direction, and
wherein a corner portion at which the third wall surface and the fifth wall surface intersect is chamfered or has a curved surface.

5. The sensor device according to claim 1, wherein the second flow path includes a first portion branching from the first flow path and extending in the second direction,
wherein the first portion includes the connection portion, and
wherein the flow path-forming member has a third opening from which fluid flowing through the second flow path is discharged.

6. The sensor device according to claim 5, wherein the second flow path includes a second portion bending from the first portion and extending in the first direction,
wherein the second portion includes a detection region in which the detection portion of the sensor chip is disposed, and
wherein the third opening is disposed downstream of the second portion.

7. The sensor device according to claim 5 or 6, wherein the third opening is formed to discharge the fluid in the first direction.

8. The sensor device according to claim 1 or 2, wherein the first flow path includes an acceleration portion disposed downstream of the connection portion with the second flow path to accelerate a flow velocity of fluid.

9. The sensor device according to claim 8, wherein the acceleration portion includes a reduced flow path in which a cross-sectional area perpendicular to a flow direction of the first flow path is reduced.

10. The sensor device according to claim 1 or 2, wherein the first flow path includes:
a flow rectifying portion disposed upstream of the connection portion and configured to rectify a flow of fluid, and
an inclined portion that is disposed upstream of the connection portion and is inclined toward a center of the first flow path when viewed in a thickness direction of the flow path-forming member, and
wherein the flow rectifying portion has a first surface facing the inclined portion.
